# EUROPÄISCHE PATENTSCHRIFT

(11) **EP 1 860 595 B1**
(45) Veröffentlichungstag und Bekanntmachung des Hinweises auf die Patenterteilung: **19.12.2012**
(21) Anmeldenummer: 07108750.6
(22) Anmeldetag: 23.05.2007
(51) Int. Cl.: G06K 19/00

(54) **Chipkarte mit wenigstens zwei Identitäten**
Chip card with at least two identities
Carte à puce dotée dýau moins deux identités

(30) Priorität: 23.05.2006 DE 102006024556
(43) Veröffentlichungstag der Anmeldung: 28.11.2007
(73) Patentinhaber: Vodafone Holding GmbH, 40213 Düsseldorf (DE)
(72) Erfinder: Kumar, Rahul, 40545 Düsseldorf (DE)
(74) Vertreter: Weisse, Renate

(56) Entgegenhaltungen:
- WO-A-92/19078
- WO-A-98/10614
- WO-A-03/058940
- DE-A1- 4 441 038
- DE-A1- 10 054 379
- DE-A1- 19 828 735
- US-A- 5 933 785
- US-B1- 6 856 818
- US-B2- 6 480 725

## Beschreibung

### Technisches Gebiet

Die Erfindung betrifft eine Chipkarte für ein Mobilfunkendgerät und ein Verfahren nach dem Oberbegriff der unabhängigen Ansprüche.

### Stand der Technik

Es sind Chipkarten für Mobilfunkendgeräte bekannt. Diese Chipkarten, welche auch als SIM-Karten (=Subscriber Identity Module) bezeichnet werden, werden zur Identifikation in das Mobilfunkendgerät eingesetzt. Über die Chipkarte wird der Mobilfunkteilnehmer in einem nach dem GSM- oder UMTS-Standard arbeitenden Mobilfunknetz eindeutig identifiziert. Die Identifizierung geschieht dabei während des Vorgangs des Einbuchens in das Mobilfunknetz. Hierzu stellt die IMSI ein gebräuchliches Identifizierungsmittel dar. IMSI ist die Abkürzung für "International Mobile Subscriber Identification". Bei dieser Subskribierung wird eine fünfzehnstellige Zahl verwendet, die durch ihre Zahlenfolge den Mobilfunkteilnehmer eindeutig beispielsweise in einem GSM-Netz beschreibt. Die IMSI wird ebenfalls für Referenzierungen von teilnehmerspezifischen Datenbeständen herangezogen. Aus Sicherheitsgründen wird eine temporäre IMSI, die sogenannte TMSI (=Temporary Mobile Subscriber Identity) generiert. Auf die TMSI wird in einem GSM-Netz zurückgegriffen, wenn verhindert werden soll, dass ein Teilnehmer mit Hilfe der IMSI auch von Unbefugten identifiziert werden kann.

Die SIM-Karte spielt bei allen benannten Verfahren eine zentrale Rolle, sie ist ein Identifizierungschip, der in einem Mobilfunkendgerät eines GSM-Netzes eingesetzt wird. Der Chip enthält teilnehmerrelevante Daten, Algorithmen sowie die Netzzugangsberechtigung. Die Algorithmen dienen der Verschlüsselung der Sprach- und Signalisierungsdaten, was auch als "Ciphering" bezeichnet wird. Das SIM dient außerdem zum Speichern von temporären, netzbezogenen Daten. Darüber hinaus können ein Telefon- und Notizbuch, Speicher für Short Message Service-Mitteilungen (SMS) und Speicher der zuletzt gerufenen Telefonnummern im SIM individuell gespeichert sein.

Aus der deutschen Patentschrift DE 100 02 216 C1 ist bekannt, dass bestehende Verträge zwischen Mobilfunkteilnehmer und Mobilfunknetzbetreiber durch teilnehmerinitiierte Einwahl in einen CSAS (= Customer Subscription and Administration Server) erweitert werden können. Dabei wird die Zugangsprozedur des bestehenden Vertragsverhältnisses zur Authentifizierung des Teilnehmers genutzt, diese Technik wird weithin angewendet, jedoch bleibt die Subskribierung auf eine Identität beschränkt.

In der deutschen Offenlegungsschrift DE 198 17 895 A1 wird ein Mobilfunkendgerät beschrieben, in dem mindestens eine Zugangsnummer zu einem Telekommunikations-Vermittlungsdienst und eine korrespondierende persönliche Identifizierungsnummer abgespeichert ist, wobei das Mobilfunkendgerät nach bereits erfolgter Authentifizierung gegenüber dem Mobilfunknetz zum Kommunikationsaufbau die Zugangsnummer und die persönliche Identifizierungsnummer bereitstellt und absendet. Auch bei dieser Technik wird nur eine Identität in Anspruch genommen.

Aus der deutschen Offenlegungsschrift DE 38 09 028 A1 ist eine IC-Karte bekannt, die als Kredit-, Geld- oder Registrierkarte genutzt werden kann. Diese Chipkarte weist einen Speicher auf, in dem mehrere Speicherbereiche vorhanden sind. In jedem Speicherbereich können ausstellerspezifische Informationen gespeichert sein und von diesem genutzt werden. Die in der Druckschrift benannte IC-Karte ist nicht für den Einsatz in Mobilfunknetzen konzipiert.

In der deutschen Offenlegungsschrift DE 100 54 379 A1 wird ein System zur Nutzung mehrerer Rufnummern mit einem Mobilfunkhandgerät beschrieben. Hierbei soll der Anwendungsbereich eines Mobilfunkhandgerätes erweitert werden, wobei die Nutzung mehrere Rufnummern bei eingehenden sowie ausgehenden Anrufen angestrebt wird. Unterschiedliche Gesprächsbereiche sollen dabei auf verschiedenen Rechnungen erfasst werden können. Zur Realisierung des Verfahrens ist die Nutzung verschiedener SIM-Karten vorgesehen, die durch das Mobilfunkendgerät eingelesen werden, es folgt eine Bündelung der Rufnummern. Die Rufnummernbündelungen werden netzseitig verwaltet und entbündelt. Die Erfindung soll den Komfort für Mobilfunknutzer mit mehreren Rufnummern vergrößern. Der Speicherbereich, der die Nutzung der verschiedenen Rufnummern ermöglicht, liegt im Mobilfunkendgerät. In diesen Speicher werden die Kennungen der Chipkarte überschrieben.

Die bekannten Verfahren haben den Nachteil, dass ein Mobilfunkteilnehmer immer nur mit einer einzigen Identität in einem Mobilfunknetz subskribiert sein kann. Unter Umständen kann es dazu kommen, dass ein Mobilfunkteilnehmer eine zweite Identität in einem Mobilfunknetz benötigt, beispielsweise wenn er eine dienstliche von einer privaten Abrechnung trennen muss oder möchte. Eine zweite Identität des gleichen Nutzers ist nur möglich, wenn die Chipkarte mit dem darauf befindlichen SIM ausgetauscht wird oder stets ein weiteres Mobilfunkendgerät mitgeführt wird. Dazu muss in den meisten Fällen konstruktionsbedingt das Mobilfunkendgerät geöffnet werden. Hiernach muss der das Mobilfunkendgerät mit Strom versorgende Akkumulator vom Mobilfunkteilnehmer herausgenommen werden. Die Chipkarte kann danach aus einer entsprechenden Halterung/Verankerung entnommen werden beziehungsweise eine andere Chipkarte, die eine zweite Identität zulässt, kann in das Gerät eingesetzt werden. Erst danach hat der Mobilfunkteilnehmer eine weitere Identität, mit der er sich in einem Mobilfunknetz identifizieren und authentifizieren kann.

Die WO 92/19078 gegen die die Ansprüche abgegrenzt wurden, offenbart eine SIM-Karte mit zwei Teilnehmeridentifikationsmodulen. Jedem Teilnehmeridentifikationsmodul ist jeweils eine unterschiedliche Kennung zum Einbuchen in ein Mobilfunknetz zugeordnet. Ein Benutzer kann wahlweise eine dieser Kennungen bei einem Einbuchen verwenden. Beispielsweise sind die Teilnehmeridentifikationsmodule an unterschiedlichen Orten auf eine Chipkarte angeordnet. Je nach Lage der Chipkarte in einer Lesevorrichtung wird entweder das eine oder das andere Teilnehmeridentifikationsmodul verwendet.

Die WO 98/10614 beschreibt ein Roaming-Verfahren, bei dem eine SIM-Karte einen ersten Satz von Teilnehmerkenndaten für ein Heimatmobilfunknetz und einen zweiten Satz von Teilnehmerkenndaten für ein Partnermobilfunknetz enthält. Ein sogenanntes UBICOM-Programm auf der SIM-Karte ermöglicht bei einem Roaming eine Verwendung des ersten oder des zweiten Satzes von Teilnehmerkenndaten in Abhängigkeit davon, ob für das besuchte Mobilfunknetz ein Roamingvertrag mit dem Heimatmobilfunknetz oder dem Partnermobilfunknetz existiert.

Die DE 44 41 038 A1 offenbart eine Chipkarte zum Erwerber, Speichern und Überprüfen von Berechtigungen zur Nutzung von unterschiedlichen Dienstleistungen. Die Chipkarte ist als multifunktionale Chipkarte ausgebildet und kann unterschiedliche Anwendungen und Kennungen in variablen Speicherbereichen des Chips ablegen. Ein Betriebssystem verwaltet die Anwendungen.

Die US 6,480,725 befasst sich mit einem Telefon, bei dem der Benutzer zwischen zwei Identitäten wählen kann. Das gewünschte Benutzerprofil ist mit einer PIN oder einem Sicherheitscode zu bestätigen.

Die WO 03/058940 beschreibt einen Schalter an einem Mobiltelefon, mit dem sich für jeden Anruf eine Kurznachricht an ein Gebührenzentrum versenden lässt. Je nach Betätigung wird dem Gebührenzentrum mittels einer Kennung mitgeteilt, ob es sich bei dem Anruf um einen dienstlichen oder privaten Anruf handelt. Im Gebührenzentrum werden auf diese Weise zwei unterschiedliche Abrechnungen erzeugt.

### Offenbarung

Aufgabe der Erfindung ist es, die Nachteile des Standes der Technik zu vermeiden und eine Vorrichtung zu schaffen, mit der ein Tauschen der Mobilfunkendgeräte bzw. der SIM-Karten bei Inanspruchnahme von Diensten, die unterschiedliche Identitäten verlangen, nicht mehr notwendig ist.

### Die Erfindung ist in den unabhängigen Ansprüchen definiert. Bevorzugte Ausführungsformen ergeben sich aus den abhängigen Ansprüchen.

Die Einrichtung hat den Vorteil, dass der Mobilfunknutzer in Diensten und Anwendungen nicht mehr nur auf eine Identität beschränkt ist. Es bieten sich Vorteile in der getrennten Kostenabrechnung der verschiedenen Identitäten und in den Möglichkeiten der differenten Datenspeicherungen in den Speicherbereichen der Chipkarte. Ebenso erlaubt die Erfindung eine Nutzung des gleichen Mobilfunkendgerätes und der gleichen Chipkarte durch zwei Mobilfunknutzer.

Somit bieten sich dem Mobilfunknetzbetreiber neue Möglichkeiten in der Administration, der Abrechnung und der Bereitstellung von auf den Benutzer zugeschnittenen Angeboten. Eine einzelne Person kann als zwei Kunden bearbeitet werden bzw. zwei Personen können unabhängig voneinander das gleiche Gerät benutzen.

Bei der erfindungsgemäßen Chipkarte ist ein Aktivierungsmechanismus vorgesehen, welcher die jeweiligen Identitäten und/oder Kennungen aktiviert. Dadurch wird ein schneller und unkomplizierter Wechsel der Identitäten mit der entsprechenden Authentifizierung ermöglicht. Vorzugsweise ist der Aktivierungsmechanismus am Mobilfunkendgerät, beispielsweise als Schalter, vorgesehen. Durch einfache Betätigung des Schalters kann zwischen den verschiedenen Identitäten gewechselt werden.

Eine bevorzugte Ausbildung der erfindungsgemäßen Technik besteht weiterhin darin, dass im Mobilfunkendgerät Steuerungsmittel zum Betätigen des Aktivierungsmechanismus vorgesehen sind. Ein oft unhandliches und zeitaufwändiges Wechseln der Chipkarte entfällt. Durch eine Variabilität in der Ausführung der Steuerungsmittel bieten sich mehrere vorteilhafte Möglichkeiten in der Aktivierung der Identitäten und/oder Kennungen. Möglich sind manuelle Schalter, Tastenkombinationen oder Spracherkennungen.

Eine weiterhin bevorzugte Ausbildung der erfindungsgemäßen Technik ergibt sich durch die Tatsache, dass die Kennung als Rufnummer ausgestaltet ist. Durch diese Maßnahme erlaubt die Erfindung eine einfachere Administration der Identitäten und/oder Kennungen im Mobilfunknetz.

In einer bevorzugten Ausführung des erfindungsgemäßen Gegenstandes sind Mittel zur getrennten Verwaltung der Identität und/oder Kennung im Mobilfunknetz vorgesehen. Sie erlauben eine unkomplizierte Erstellung von getrennten Rechnungen für das gleiche Mobilfunkendgerät und ermöglichen unterschiedliche Benutzerprofile, denen verschiedene Dienstleistungen und/oder Angebote offeriert werden können.

Filtermittel, welche Verbindungen nur für die aktivierte Identität und/oder Kennung zulassen, sind eine weitere vorteilhafte Ausgestaltung der erfindungsgemäßen Technik. Sie erlauben es einem Arbeitgeber, der dem Mobilfunknutzer ein Mobilfunkendgerät für dienstliche Zwecke zur Verfügung stellt, die Kosten für unangemessene private Gespräche oder in Anspruch genommene Dienstleistungen zu senken. Ein weiterer positiver Aspekt ist hier die Unterbindung des Aufbaus von extragebührenpflichtigen Rufnummern, die unter Umständen eine 0190er-Vorwahl beinhalten. Beispielsweise Kinder, die das Mobilfunkendgerät als Mitnutzer in Anspruch nehmen, werden so vor für sie nicht freigegebenen Inhalten geschützt.

Ein weitere Vorteile bietendes Verfahren besteht in der Tatsache, dass die Identitäten und/oder Kennungen getrennt im Mobilfunknetz verwaltet werden. Die Kostenerstellung ist somit vereinfacht, die Erstellung von differenten Benutzerprofilen wird ermöglicht.

Weitere Vorteile der Erfindung ergeben sich aus dem Gegenstand der Unteransprüche, sowie den Zeichnungen mit den dazugehörigen Beschreibungen.

### Kurze Beschreibung der Zeichnung

- Fig. 1: zeigt in einer Prinzipskizze ein Ausführungsbeispiel einer erfindungsgemäßen Chipkarte, welche in ein Mobilfunkendgerät zur Integration in ein Mobilfunknetz eingesetzt wird.

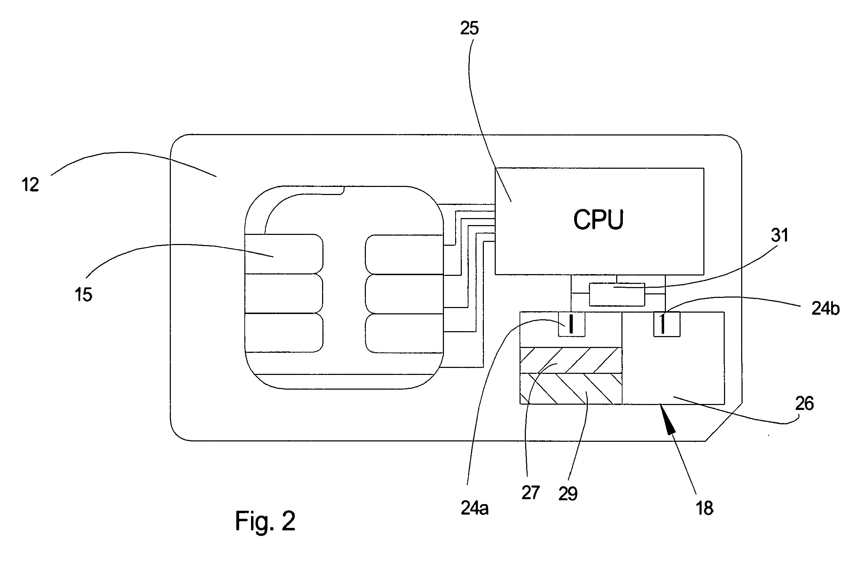

- Fig. 2: zeigt in einer Prinzipskizze ein Ausführungsbeispiel einer erfindungsgemäßen Chipkarte.

### Bevorzugte Ausführungsbeispiele

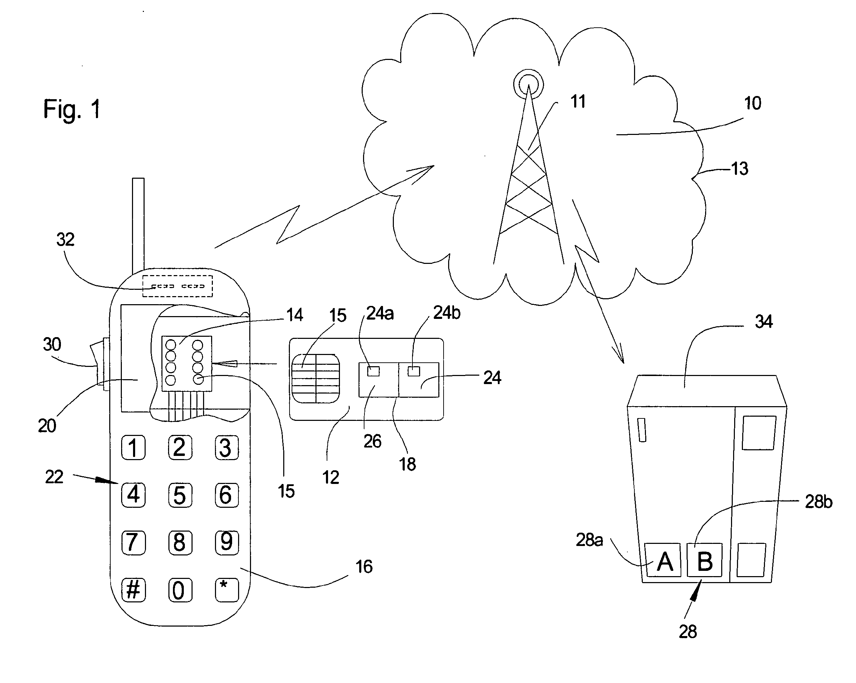

Fig. 1 zeigt in einer Prinzipskizze ein Ausführungsbeispiel einer erfindungsgemäßen Ausführung zum Identifizieren und Authentifizieren eines Mobilfunkteilnehmers in einem Mobilfunknetz 10. Das Mobilfunknetz 10 wird durch einen Funkmasten 11 und eine Wolke 13 symbolisiert und beinhaltet alles, was ein nach dem GSM- oder UMTS-Standard arbeitendes Mobilfunknetz benötigt. Das Mobilfunknetz enthält insbesondere einen zentralen Server 34. Der zentrale Server 34 dient zur Verwaltung von Kommunikationsverbindungen und von Mobilfunkteilnehmern. Der Server 34 überprüft ferner die Identität eines Mobilfunkteilnehmers, wenn er sich in das Mobilfunknetz 10 zur Kommunikation einbucht. Die Identität eines Mobilfunkteilnehmers in einem Mobilfunknetz nach dem GSM-Standard wird anhand der IMSI bzw. TMSI festgestellt.

Die IMSI dient der Identifikation eines Mobilfunkteilnehmers und der Vermittlung beziehungsweise der Signalisierung eines Anrufes. Die IMSI wird zur Referenzierung der teilnehmerspezifischen Datenbestände herangezogen. Neben der in diesem Ausführungsbeispiel genannten IMSI können auch andere Identifikationsmechanismen herangezogen werden.

Eine Chipkarte 12 wird in einen Chipkartenleser 14 eines Mobilfunkendgerätes 16 eingesetzt. Die Verbindung zwischen Chipkarte 12 und Mobilfunkendgerät 16 wird über Kontakte 15 hergestellt. Über die Kontakte 15 wird der Zugriff auf die Chipkarte 12 durch den Chipkartenleser 14 bzw. darüber durch das Mobilfunkendgerät 16 ermöglicht. Desweiteren verfügt die Chipkarte 12 über einen Datenspeicher 18, welcher durch das Mobilfunkendgerät 16 über die Kontakte 15 ausgelesen und/oder beschrieben werden kann. Auf der Chipkarte 12 ist eine Prozessoreinheit CPU (= Central Processing Unit) 25 installiert. Die CPU 25 dient hauptsächlich der Speicherverwaltung der Chipkarte 12. Applikationen können von der CPU 25 ebenfalls ausgeführt werden.

Das Mobilfunkendgerät 16 weist weiterhin eine Anzeige 20 und ein Tastenfeld 22 auf. Das Tastenfeld 22 dient zur Eingabe von zum Beispiel Telefonnummern oder Adressen. Hierüber lässt sich auch ein auf der Anzeige 20 dargestelltes Menü zur Steuerung und Bedienung des Mobilfunkendgerätes 16 steuern.

Der Datenspeicher 18 weist zwei Speicherbereiche 24, 26 auf, in denen jeweils eine Identität 24a, 24b gespeichert ist. In den Speicherbereichen 24, 26 können neben den jeweiligen Identitäten 24a, 24b auch andere Daten oder Anwendungen abgespeichert sein. Dazu gehören zum Beispiel im ersten Speicherbereich 24 abgelegte geschäftsrelevante Telefonnummern und Adressen sowie andere für die geschäftliche/berufliche Nutzung relevante Datensätze. Im zweiten Speicherbereich 26 können zusätzlich vom Nutzer Daten hinterlegt werden, die mehr von persönlichem Interesse für den Mobilfunkteilnehmer sind oder zum Beispiel von einem Familienangehörigen angelegt wurden, der das Mobilfunkendgerät 16 parallel unter einer anderen Identität 24a, 24b mitbenutzt.

Es besteht weiterhin die Möglichkeit, verschiedene Einstellungen des Mobilfunkendgerätes 16 unter den verschiedenen Identitäten 24a, 24b jeweils in den Speicherbereichen 24, 26 des Datenspeichers 18 zu hinterlegen. Es können erwünschte, spezifische Anwenderprofile 27 mit individuellen Einstellungen 29 dort gespeichert sein, beinhaltend z. B. Lautstärken des Ruftones, individuelle Menüführung, etc.

Auf dem Server 34 des Mobilfunknetzes 10 sind Mittel zur getrennten Verwaltung 28 der vom Mobilfunkteilnehmer gewählten Identitäten 24a, 24b installiert, obwohl im Mobilfunkendgerät 16 nur eine Chipkarte 12 verwendet wird. Die Mittel zur getrennten Verwaltung 28 sind als Module 28a, 28b des Servers 34 ausgestaltet, die die verschiedenen Identitäten der Mobilfunkteilnehmer im Mobilfunknetz 10 verwalten.

Ein Aktivierungsmechanismus 31 wird über einen Schalter 30 betätigt. Der Aktivierungsmechanismus 31 kann als elektronische Schaltung auf der Chipkarte 12 ausgebildet sein. An Stelle des Schalters 30 kann auch eine Tastenkombination verwendet werden. Die Tastenkombination wird über das Tastenfeld 22 eingegeben. Möglich ist hierbei auch eine Spracherkennung, die den Aktivierungsmechanismus 31 betätigt und ein Umschalten der Identitäten 24a, 24b veranlasst. Durch die hiermit durchgeführte Aktivierung einer jeweiligen Identität 20a, 20b des Mobilfunkteilnehmers erfolgt ein Einbuchen unter einer jeweiligen Identität in dem Mobilfunknetz 10. Die voneinander differierenden Identitäten 24a, 24b erlauben einem Nutzer jeweils angebotene oder angepasste bzw. erwünschte Kompetenzen und Nutzungsmöglichkeiten im Mobilfunknetz 10. Es besteht die Möglichkeit zur Erstellung von getrennten Rechnungen und Listen mit getätigten Gesprächen beziehungsweise in Anspruch genommenen Dienstleistungen. Wenn zum Beispiel ein Arbeitgeber es wünscht, lassen sich bestimmte dienstliche Gesprächsdaten speichern.

Filtermittel 32 können den Modulen 28a, 28b auf dem Server 34 zugeschaltet sein oder im Mobilfunkendgerät 16 untergebracht werden. Die Filtermittel 32 sollen nur erlaubte Verbindungen, Dienstleistungen und Rufnummern zulassen. Eine private Nutzung eines Diensttelefons soll mit diesem Mittel unterbunden werden. Es ist nicht möglich, unter der Identität 24a, 24b Nummern anzurufen, die nicht freigeschaltet wurden. Ein Verbindungsaufbau zu bestimmten Gesprächsteilnehmern kommt somit nicht zu Stande.

Mit der im Speicherbereich 24 des Datenspeichers 18 gespeicherten Identität 24a, 24b des Mobilfunkteilnehmers wird eine eigene Rufnummer für die jeweilige Benutzeroberfläche verwendet. Es läßt sich so eine private und eine geschäftliche Nutzung des gleichen Mobilfunkendgerätes 16 realisieren. Ein zeitaufwändiges und unhandliches Auswechseln der Chipkarte 12 ist nicht mehr erforderlich.

Bei der Nutzung der erfindungsgemäßen Ausführung kann eine Erreichbarkeit des Mobilfunkteilnehmers erzielt werden, obwohl der Benutzer des Mobilfunkendgerätes 16 nicht unter der Identität 24a, 24b eingeloggt ist, auf der ein Anruf eingeht.

## Patentansprüche

1. Chipkarte (12) für ein Mobilfunkendgerät (16), welche zum Identifizieren und Authentifizieren eines Mobilfunkteilnehmers beim Einbuchen in ein Mobilfunknetz (10) in einen Chipkartenleser (14) des Mobilfunkendgeräts (16) einsetzbar ist, wobei
a) die Chipkarte (12) einen Datenspeicher (18) enthält, welcher durch das Mobilfunkendgerät (10) ausgelesen und/oder beschrieben werden kann,
b) in einem Speicherbereich (24) des Datenspeichers (18) eine erste Identität und Rufnummer (24a) des Mobilfunkteilnehmers zum Einbuchen in das Mobilfunknetz (10) gespeichert sind,
c) wenigstens eine weitere gespeicherte Identität und Rufnummer (24b) zum Einbuchen in das Mobilfunknetz (10) in einem weiteren Speicherbereich (26) des Datenspeichers (18) der Chipkarte (12) vorgesehen ist, welche zusätzlich zur ersten Identität und Rufnummer (24a) aktivierbar sind, und
d) ein Aktivierungsmechanismus (31) zum Aktivieren der jeweiligen Identität und Rufnummer (24a, 24b) für ein Einbuchen unter der aktivierten Identität und Rufnummer (24a, 24b) in das Mobilfunknetz (10) vorgesehen ist,
**dadurch gekennzeichnet, dass**
e) der Aktivierungsmechanismus (31) als elektronische Schaltung auf der Chipkarte (12) zum Umschalten der Identitäten (24a, 24b) und Aktivieren der jeweiligen Identität (24a, 24b) und Rufnummer ausgebildet ist und durch einen manuellen Schalter (30) des Mobilfunkendgeräts (16) betätigbar ist, und dass
f) neben der jeweiligen Identität und Rufnummer (24a, 24b) zusätzlich Anwenderprofile (27) mit individuellen Einstellungen (29) des Mobilfunkendgerätes (16) unter den verschiedenen Identitäten (24a, 24b) jeweils in den Speicherbereichen (24, 26) des Datenspeichers (18) speicherbar sind.

2. Chipkarte (12) nach Anspruch 1, **gekennzeichnet durch** Filtermittel (32), welche Verbindungen nur für die aktivierte Identität und Rufnummer (24a, 24b) zulassen.

3. Verfahren zum Identifizieren und Authentifizieren eines Mobilfunkteilnehmers beim Einbuchen in ein Mobilfunknetz (10), wobei
a) eine Chipkarte (12) in einen Chipkartenleser (14) eines Mobilfunkendgeräts (16) zum Auslesen und/oder Beschreiben eines Datenspeichers (18) der Chipkarte (12) durch das Mobilfunkendgerät (16) eingesetzt wird,
b) in einem Speicherbereich (24) des Datenspeichers (18) eine erste Identität und Rufnummer des Mobilfunkteilnehmers (24a) zum Einbuchen in das Mobilfunknetz (10) gespeichert sind,
c) wenigstens eine weitere Identität und Rufnummer (24b) zum Einbuchen in das Mobilfunknetz (10) in einem weiteren Speicherbereich (26) des Datenspeichers (18) der Chipkarte (12) gespeichert wird, welche zusätzlich zur ersten Identität und Rufnummer (24a) aktivierbar sind,
d) bei einer Aktivierung der jeweiligen Identität und Rufnummer (24a, 24b) durch einen Aktivierungsmechanismus (31) ein Einbuchen unter der aktivierten Identität und Rufnummer (24a, 24b) in das Mobilfunknetz (10) erfolgt,
**gekennzeichnet durch**
e) Aktivieren der jeweiligen Identität (24a, 24b) und Rufnummer und Umschalten der Identitäten (24a, 24b) **durch** einen Aktivierungsmechanismus (31), der als elektronische Schaltung auf der Chipkarte (12) und **durch** einen manuellen Schalter (30) des Mobilfunkendgeräts (16) betätigbar ausgebildet ist, und
f) Speichern von Anwenderprofilen mit individuellen Einstellungen (29) des Mobilfunkendgerätes (16) unter den verschiedenen Identitäten (24a, 24b) zusätzlich zu der jeweiligen Identität und Rufnummer (24a, 24b) in den Speicherbereichen (24, 26) des Datenspeichers (18).

4. Verfahren nach Anspruch 3, **dadurch gekennzeichnet, dass** die Identitäten und Rufnummern (24a, 24b) getrennt im Mobilfunknetz (10) verwaltet werden.

## Claims

1. A chip card (12) for a mobile terminal (16) which is insertable into a chip card reader (14) of the mobile terminal (16) for identifying and authenticating a mobile subscriber when logging into a mobile radio network (10), wherein
a) the chip card (12) comprises a data memory (18), which can be read out or written to by the mobile terminal (10),
b) a first identity and call number (24a) of the mobile subscriber are stored in a memory area (24) of the data memory (18) for logging into the mobile radio network (10),
c) at least one other identity and call number (24b) are provided in a further memory area (26) of the data memory (18) of the chip card (12) for logging into the mobile radio network (10) which are activatable in addition to the first identity and call number (24a), and
d) an activating mechanism (31) is provided for activating the respective identity and call number (24a, 24b) for logging into the mobile radio network (10) with the activated identity and call number (24a, 24b),
**characterized in that**
e) the activating mechanism (31) is an electronic circuit on the chip card (12) for switching the identities (24a, 24b) and activating the respective identity (24a, 24b) and call number, and is operable by a manual switch (30) of the mobile terminal ( 16), and **in that**
f) user profiles (27) with individual settings (29) of the mobile terminal (16) can be stored under the several identities (24a, 24b) in the respective memory areas (24, 26) of the data memory (18) additionally to the respective identity and call number (24a, 24b).

2. A chip card (12) according to claim 1, **characterized by** filter means (32), which only permit connections for the activated identity and call number (24a, 24b).

3. A method for identifying and authenticating a mobile subscriber when logging into a mobile radio network (10), wherein
a) a chip card (12) is inserted into a chip card reader (14) of a mobile terminal (16) for reading out and/or writing to a data memory (18) of the chip card (12) by the mobile terminal (16),
b) a first identity and call number of the mobile subscriber (24a) are stored in a memory area (24) of the data memory (18) for logging into the mobile radio network (10),
c) at least one other identity and call number (24b) for logging into the mobile radio network (10) are stored in a further memory area (26) of the data memory (18) of the chip card (12) which are activatable in addition to the first identity and call number (24a),
d) a login with the activated identity and call number (24a, 24b) into the mobile radio network (10) is carried out on activation of the respective identity and call number (24a, 24b) by an activation mechanism (31),
**characterized by**
e) activating the respective identity (24a, 24b) and call number and switching of the identities (24a, 24b) by an activation mechanism (31), which is an electronic circuit on the chip card (12) and is operable by a manual switch (30) of the mobile terminal (16), and
f) storing user profiles with individual settings (29) of the mobile terminal (16) under the several identities (24a, 24b) in addition to the respective identity and call number (24a, 24b)) in the memory areas (24, 26) of the data memory (18).

4. A method according to claim 3, **characterized in that** the identities and call numbers (24a, 24b) are separately managed in the mobile radio network (10).

## Revendications

1. Carte à puce (12) pour un terminal de radiotéléphonie mobile (16) pouvant être utilisée dans un lecteur de carte à puce (14) du terminal de radiotéléphonie mobile (16) pour identifier et authentifier un abonné de radiotéléphonie mobile lors de l'enregistrement dans un réseau de radiotéléphonie mobile (10),
(a) la carte à puce (12) comprenant une mémoire de données (18) qui peut être lue et/ou écrite par le terminal de radiotéléphonie mobile (10),
(b) une première identité et un premier numéro d'appel (24a) de l'abonné de radiotéléphonie mobile étant mémorisés dans une zone de mémorisation (24) de la mémoire de données (18) en vue de l'enregistrement dans le réseau de radiotéléphonie mobile (10),
(c) au moins une autre identité et au autre numéro d'appel mémorisés (24b), pouvant être activés en plus de la première identité et du premier numéro d'appel (24a), étant prévus dans une autre zone de mémorisation (26) de la mémoire de données (18) de la carte à puce (12) en vue de l'enregistrement dans le réseau de radiotéléphonie mobile (10), et
(d) un mécanisme d'activation (31) étant prévu pour activer l'identité et le numéro d'appel respectifs (24a, 24b) pour un enregistrement dans le réseau de radiotéléphonie mobile (10) sous l'identité et au numéro d'appel activés (24a, 24b) dans le réseau de radiotéléphonie mobile (10),
**caractérisée en ce que**
(e) le mécanisme d'activation (31) est configuré sous forme de commutation électronique sur la carte à puce (12) en vue de commuter les identités (24a, 24b) et d'activer l'identité respective (24a, 24b) et le numéro d'appel et peut être actionné par un commutateur manuel (30) du terminal de radiotéléphonie mobile (16), et que
(f) outre l'identité et le numéro d'appel respectifs (24a, 24b), des profils d'utilisateur (27) peuvent être en plus mémorisés à chaque fois dans les zones de mémorisation (24, 26) de la mémoire de données (18) à l'aide de paramétrages individualisés (29) du terminal de radiotéléphonie mobile (16) sous les différentes identités (24a, 24b).

2. Carte à puce (12) selon la revendication 1, **caractérisée par** des moyens de filtrage (32) permettant des connexions uniquement pour l'identité et le numéro d'appel activés (24a, 24b).

3. Procédé pour l'identification et l'authentification d'un abonné de radiotéléphonie mobile lors de l'enregistrement dans un réseau de radiotéléphonie mobile (10),
(a) une carte à puce (12) étant utilisée dans un lecteur de carte à puce (14) du terminal de radiotéléphonie mobile (16) pour la lecture et/ou l'écriture d'une mémoire de données (18) de la carte à puce (12) par le terminal de radiotéléphonie mobile (16),
(b) une première identité et un premier numéro de l'abonné de radiotéléphonie mobile (24a) étant mémorisés dans une zone de mémorisation (24) de la mémoire de données (18) en vue de l'enregistrement dans le réseau de radiotéléphonie mobile (10),
(c) au moins une autre identité et un autre numéro d'appel (24b), pouvant être activés en plus de la première identité et du premier numéro d'appel (24a), étant mémorisés dans une autre zone de mémorisation (26) de la mémoire de données (18) de la carte à puce (12) en vue de l'enregistrement dans le réseau de radiotéléphonie (10),
(d) un enregistrement sous l'identité et au numéro d'appel activés (24a, 24b) dans le réseau de radiotéléphonie mobile (10) ayant lieu lors de l'activation de l'identité et du numéro d'appel respectifs (24a, 24b) par un mécanisme d'activation (31),
**caractérisé par**
(e) l'activation de l'identité respective (24a, 24b) et du numéro d'appel et la commutation des identités (24a, 24b) par un mécanisme d'activation (31) configuré sous forme de commutation électronique sur le carte à puce (12) et de manière à pouvoir être actionné par un commutateur manuel (30) du terminal de radiotéléphonie mobile (16), et
(f) la mémorisation de profils d'utilisateur à l'aide de paramétrages individualisés (29) du terminal de radiotéléphonie mobile (16) sous les différentes identités (24a, 24b), en plus de l'identité et du numéro d'appel respectifs (24a, 24b), dans les zones de mémorisation (24, 26) de la mémoire de données (18).

4. Procédé selon la revendication 3, **caractérisé en ce que** les identités et les numéros d'appel (24a, 24b) sont gérés séparément dans le réseau de radiotéléphonie mobile (10).
